# EUROPÄISCHE PATENTSCHRIFT

(11) **EP 0 742 621 B1**
(45) Veröffentlichungstag und Bekanntmachung des Hinweises auf die Patenterteilung: **20.10.1999**
(21) Anmeldenummer: 96890081.1
(22) Anmeldetag: 08.05.1996
(51) Int. Cl.: H01S 3/0975, H01S 3/036, H01S 3/038, H01S 3/081, B23K 26/06

(54) **Hochfrequenzerregter Gaslaser**
High-frequency excited gas-laser
Laser à gaz excité en haute fréquence

(30) Priorität: 08.05.1995 AT 77595
(43) Veröffentlichungstag der Anmeldung: 13.11.1996
(73) Patentinhaber: Wild GmbH, 9100 Völkermarkt, Kärnten (AT)
(72) Erfinder: Als, Andreas, Ing., 6300 Wörgl, Tirol (AT); Bohrer, Markus, Dipl.-Ing. Dr., 1010 Wien (AT); Brutschy, Hans Peter, 9100 Völkermarkt (AT); Schuöcker, Dieter, Univ. Prof. Dr., 1180 Wien (AT)
(74) Vertreter: Casati, Wilhelm, Dipl.-Ing.

(56) Entgegenhaltungen:
- EP-A- 0 100 089
- EP-A- 0 185 226
- EP-A- 0 610 170
- EP-B- 0 152 084
- WO-A-81/02954
- WO-A-91/01580
- DE-A- 3 810 604
- DE-C- 3 316 778
- US-A- 5 237 149
- JOURNAL OF PHYSICS D APPLIED PHYSICS., Bd. 26, Nr. 2, 14.Februar 1993, LETCHWORTH GB, Seiten 183-191, XP002007295 D.EHRLICHMANN ET AL,: "DIFFUSIO-COOLED CO2 LASER WITH COAXIAL HIGH FREQUENCY EXCITATION AND INTERNAL AXICON"

## Beschreibung

Die Erfindung betrifft einen hochfrequenzerregten Gaslaser, dessen Strömungskanäle von zylindrischen, im Querschnitt ringförmigen Außenelektroden umschlossen sind, wobei in den Strömungskanälen konzentrisch zu den Außenelektroden, die Inneneleketroden angeordnet sind.

Solche hochfrequenzerregte Gaslaser sind bekannt, siehe z.B. EP-A-0 610 170 oder Journal of Physics D: Applied Physics, Bd. 26, Nr. 2, 14/02/93, Seiten 183-191. So beschreibt etwa die DE-OS 3 810 604 einen Gaslaser, bei welchem der Entladungsraum konzentrisch um eine rohrförmige Zentralelektrode angeordnet ist. Ebenfalls konzentrisch zu dieser Zentralelektrode ist eine isolierende und gasdichte Wandung vorgesehen, an deren Außenseite eine ebenfalls rohrförmige Elektrode anliegt. Zwischen der Innenelektrode und der Außenelektrode wird eine hochfrequente (27 Mhz) Wechselspannung von einigen kV angelegt. Bei diesem Laser wird der Laserstrahlengang an einem Ende durch ringförmige Planspiegel in sich zurückreflektiert. Anschwingverhalten und Betriebsstabilität befriedigen bei einer solchen Anordnung nicht. Auch das durch die Öffnung des Ringspiegels hindurchströmende Lasergas führt zu einer ungleichen Temperaturverteilung und in weiterer Folge zu einer thermischen Deformation der Umlenkspiegel. Über die Aufhängung der zentralen Innenelektroden ist nichts ausgesagt. Bei einem gegenüber dem zuvor beschriebenen Ausführungsbeispiel geänderten Ausführungsbeispiel nach genannter DE-OS wird die innere Elektrode an zwei aus den Stirnseiten der Elektrode heraustretenden Zapfen aufgehängt. Insbesondere längere und dünnere Innenelektroden lassen sich so nicht ausreichend stabil befestigen.

Eine weitere Laseranordnung mit ringkanalförmiger Strömungsausbildung zeigt die WO/DE 91/00239. Die optische Strahlung wird hier bei jeder Reflexion an den stirnseitig angeordneten Spiegeln auch in Umfangsrichtung abgelenkt, bis der Strahlengang durch eine Aussparung in einem von zwei stirnseitigen Spiegeln aus dem Resonator austreten kann. Durch diese Art der Ablenkung der Strahlung in Umfangsrichtung ist ein Austreten von Strahlung aus dem Resonatorraum bzw. eine verstärkte Quermodenbildung und ein verminderter optischer Wirkungsgrad zu befürchten.

Aufgabe der Erfindung ist es, die Nachteile der vorerwähnten bekannten Laser zu vermeiden. Hiezu wird vorgeschlagen, daß gemäß der Erfindung jede Innenelektrode über mindestens einen radial verlaufenden Steg gegen die Innenwand des Strömungskanales abgestützt ist, dadurch gekennzeichnet, daß die Abstützung jeder Innenelektrode jeweils mindestens im Bereich der Eintrittsöffnung in den Strömungskanal und außerhalb des durch die Erstreckung der Außenelektroden definierten Entladungsbereiches liegt.

Die erfindungsgemäße Halterung für die Innenelektrode ergibt eine stabile Lage der Innenelektrode, wobei im Falle einer fliegenden Aufhängung der Innenelektrode der optische Strahl im Resonator nur an einer Stelle (bezogen auf die Längsrichtung des Laserrohres) unterbrochen wird, wobei der optische Strahl je nach Auskoppelgrad, mehrmals den Laserinnenraum in Längsrichtung durchwandert und dabei jeweils einer Beugung unterworfen ist.

Eine weitere Ausgestaltung des Erfindungsgegenstandes sieht vor, daß bei Abstützung der Innenelektrode über nur einen radial verlaufenden Steg, dieser Steg vertikal verläuft und demgemäß die Innenelektrode von unten stützt. Bei dieser Ausführung wird der Strahl radial gesehen, nur an einer Stelle gestört (dort schwingt der Laser überhaupt nicht an).

Bevorzugt ist es, wenn die radial verlaufenden, die Innenelektrode stützenden Stege gleiche Winkel miteinander einschließen. Diese Art der Elektrodenhalterung erlaubt bei günstiger Lagesicherung der Innenelektrode, den Erhalt der Strömungssymmetrie.

Eine weitere Ausführungsform des erfindungsgemäßen Gaslasers ist dadurch gekennzeichnet, daß die Innenelektrode mit einem Goldüberzug versehen ist, bevorzugt in einer Stärke entsprechend der Eindringtiefe zufolge des Skineffekts bei hochfrequenten Strömen insbesondere im Bereich von einigen zehn Mikrometern. Diese Ausführungsform ergibt eine sehr gute Leitfähigkeit, die zufolge des Skineffektes und der hochfrequenten, starken Ströme (z.B. 27,12 Mhz, ca. 80 A) wichtig ist; zudem muß die Oberfläche oxidationsfrei sein (deshalb ist etwa Silber nicht so gut zu verwenden).

Vorteilhaft ist es weiters, wenn die Innenelektrode hohl ausgebildet ist und dem Hohlraum ein Kühlmittel, z.B. Wasser, zuführbar ist. Die Kühlung der Innenelektrode bewirkt hiebei eine Kühlung des Lasergases und verringert somit die Druckverluste.

Bei langen Innenelektroden, z.B. von einer 400 mm überschreitenden Länge, ist es von Vorteil, wenn die Innenelektroden mehrfach über ihre Länge durch radial verlaufende Stege abgestützt sind, wobei die Stege in axialer Richtung der Innenelektrode miteinander fluchtend angeordnet sind. Die so erzielte Mehrfachabstützung stellt eine stabile Lage sicher, wobei allerdings die Mehrfachabstützung den gebeugten Strahlanteil jeweils abschattet.

In weiterer Ausgestaltung der Erfindung kann der Strömungskanal am austrittsseitigen Ende als Diffusor ausgebildet sein, wobei gegebenenfalls die Innenelektrode im Bereich des Diffusors sich in Richtung auf den Austritt aus dem Diffusor verjüngt. Durch die Diffusorbildung wird die Gasgeschwindigkeit,, die am Ende der Gasentladung knapp unter der Mach-Geschwindigkeit liegt, gesenkt, wodurch die Wiedervereinigungsverluste im Auströmblock vermindert werden. Eine Verjüngung der Innenelektrode ist zweckmäßig, damit der Gasstrom sich dort nicht verwirbelt und so wiederum die Verluste erhöht.

In Weiterbildung der Erfindung ist vorgesehen, daß der Ausströmblock zwei mit ihren Längsachsen fluchtend angeordnete Innenelektroden voneinander trennt. Bei dieser Anordnung wird die gesamte Anregungsenergie für das Lasergas auf zwei Entladungen aufgeteilt, da die maximale Strömungsgeschwindigkeit durch die Schallgeschwindigkeit begrenzt ist und der gesamte Massendurchsatz durch die Aufteilung auf zwei Laserrohre bei gleichem Rohrdurchmesser verdoppelt werden kann. Die Innenelektroden fluchten, um eine möglichst geringe Abschattung des Laserstrahls zu erzielen.

Es ist weiters von Vorteil, wenn im Abstand des vom Ausströmblock abliegenden Endes einer der Innenelektroden ein Reflektor angeordnet ist, der als Scheibe mit einer toroidalen Fläche an seiner der Innenelektrode zugewandten Seite ausgebildet ist, wobei der Krümmungsradius der toroidalen Fläche bevorzugt zwischen 10 und 20 m liegt. Diese Ausgestaltung ergibt gegenüber einem idealen, planparallelen Resonator eine verbesserte Stimmung des Resonators, weil ein idealer planparalleler Resonator sich zufolge geringster mechanischer Veränderungen der Resonatorgeometrie verstimmen würde.

Eine weitere Ausführung des erfindungsgemäßen Gaslasers ist dadurch gekennzeichnet, daß jeder Strömungskanal an seinem vom Ausströmblock abliegenden Ende an einem Block angeschlossen ist, deren jeder an eine Frischgaszuführung angeschlossen ist und daß gegebenenfalls in einen der Blöcke der Reflektor eingebaut ist und der andere der Blöcke mit dem, gegebenenfalls teilverspiegelten Auskoppelfenster versehen ist. Diese Ausführungsform erlaubt eine besonders zweckmäßige Frischgaszufuhr, die zufolge der Dissoziation von 2 CO2 in 2 CO und O2 im Ausmaß von einigen zehn Liter Gas pro Stunde notwendig ist.

Bevorzugt ist eine Ausführungsform, bei der im optischen Strahlengang, nach dem Auskoppelfenster, ein Kollimator zur Verkleinerung des Durchmessers des aus dem Auskoppelfenster austretenden Laserstrahles, bevorzugt auf den halben Durchmesser des aus dem Auskoppelfenster austretenden Laserstrahles, angeordnet ist. Diese Ausgestaltung erlaubt den, bei sonst sehr günstigen Vorteilen eines Koax-Lasers auftretenden, Nachteil des großen Durchmessers (z.B. 80 mm) des Rohrstrahles und des sich daraus ergebenden aufwendigen weiteren Strahltransports wegen der großen dafür benötigten Optiken, insbesondere der allfälligen Umlenkoptiken, die ja zudem nocheinmal um den Faktor √2 größer sein müssen als die freie Apertur für den Strahltransport, zu vermindern.

Die hohlzylindrische Geometrie des Gaslasers erlaubt es, in besonders zweckmäßiger Weise zur Fokussierung des aus dem Auskoppelfenster austretenden Laserstrahles einen sphärischen oder parabolischen Reflektor vorzusehen, wobei zur Auslenkung des reflektierten Strahles aus dem zum Reflektor führenden Strahlenbündel ein Planspiegel vorgesehen ist oder die Rotationsachse des Reflektors unter einem Winkel von bevorzugt 45°, gegen die optische Längsachse des Laserstrahles geneigt angeordnet ist.

Die Erfindung wird nachstehend anhand der Zeichnung beispielsweise näher erläutert. Es zeigen:
Fig. 1 einen Längsschnitt durch einen Gaslaser mit einer schematischen Darstellung der notwendigsten mechanischen Aggregate, die
Fig. 2, 3 und 4 Prinzipdarstellungen des Strahlenganges, die
Fig. 5 und 6 Längsschnitte durch die Endkopfanordnungen des Gaslasers gemäß der Erfindung,
Fig. 7 einen Querschnitt nahe dem Endkopf senkrecht zur Achse des Gaslasers,
Fig. 8 eine Ansicht dieses Endkopfes von der Seite,
Fig. 9 einen Querschnitt nahe dem Ausströmblock senkrecht zur Achse des Gaslasers und die
Fig. 10 bis Fig. 13 alternative Endladeröhren des Resonators.

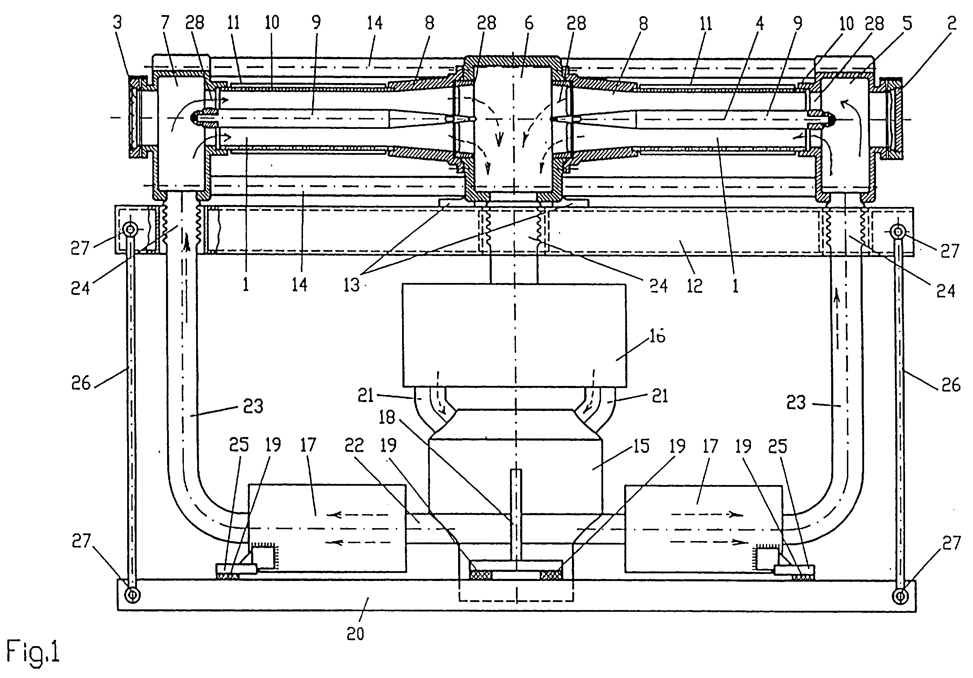

In Fig. 1 bezeichnet einen Ringkanal, der sowohl links als auch rechts von einem Ausströmblock 6 vorgesehen ist, wodurch ein Resonatorhohlraum gebildet wird. Innerhalb dieses Resonatorhohlraums läuft die Laserstrahlung zwischen dem rechtsseitig angeordneten Reflektor 2 und dem linksseitigen teilverspiegelten Auskoppelfenster 3 parallel zur Laserlängsachse 4. Im rechten Ringkanal 1 strömt Lasergas vom Endblock 5 kommend in Richtung des Ausströmblockes 6. In den linken Ringkanal 1 tritt Lasergas vom Auskoppelblock 7 ein und strömt auch hier in Richtung des Ausströmblockes 6. Das Lasergas besteht aus etwa 75 Vol.-% Helium, 20 Vol.-% Stickstoff und 5 Vol.-% Kohlendioxid. Hierbei handelt es sich um Richtwerte, Abweichungen im Einzelfall sind möglich. Der Absolutdruck des Lasergases liegt bei etwa 80 bis 100 mbar, dieser ist also gegenüber dem atmosphärischen Druck stark abgesenkt. Die Geschwindigkeit des Gases beim Eintritt vom Endblock 5 in den Ringkanal 1 beträgt etwa 180 - 200 m/s. Durch die Energieeinkopplung über ein Hochfrequenzfeld erwärmt sich das Gas erheblich, denn nur ein geringer Anteil der so eingekoppelten Energie wird in Form optischer Strahlung freigesetzt, der Rest wird in Wärme umgewandelt, die durch Kühlungsmaßnahmen dem Prozeß wieder entzogen werden muß. Durch die Erwärmung des Lasergases erhöht sich die Strömungsgeschwindigkeit dieses Gases beträchtlich. Erreicht diese die Schallgeschwindigkeit (ca. 500m/s), dann tritt ein als thermische Verstopfung bekannter Effekt ein. Eine Steigerung der Durchsatzmenge durch Erhöhung des Pumpendruckes kann dann nicht mehr erzielt werden. Deshalb versucht man den Gasdurchsatz durch Vergrößerung der Strömungsquerschnitte für das Lasergas zu erhöhen und die Längen der Aufheizzonen zu reduzieren. Die hier gezeigte Aufspaltung der Strömung in zwei Teilströme (vom Endblock 5 zum Ausströmblock 6 und vom Auskoppelblock 7 zum Ausströmblock 6) und die Ausbildung des Resonatorquerschnittes als Ring sind Möglichkeiten, diese Aufgabe zu lösen, wobei für das die Gasentladung anregende elektrische Wechselfeld ebenfalls optimale Bedingungen erreichbar sind. Die statisch einwandfreie, schwingungsarme und thermostabile Aufhängung der Innenelektroden ist dann aber eine der zu lösenden Aufgaben.

Von den Ringkanälen 1 strömt das heiße Lasergas in den Ausströmblock 6. Die beiden Gasteilströme prallen dort mit großer Geschwindigkeit aufeinander und verursachen einen Druckverlust, der dem Quadrat der Strömungsgeschwindigkeiten an dieser Stelle proportional ist. Mittels Diffusoren 8 knapp vor dem Ausströmblock 6 kann die Geschwindigkeit der beiden Teilströme verringert und somit der Druckverlust reduziert werden.

Die Ringkanäle 1 werden von den Innenelektroden 9 und den äußeren gasdichten und elektrisch isolierenden, Laserrohren 10 gebildet. Letztere können z.B. aus einer hitzefesten Glassorte bestehen. An der äußeren Wand der Laserrohre 10 sind Außenelektroden 11 vorgesehen. Zwischen den Außenelektroden 11 und den Innenelektroden 9 liegt ein hochfrequentes Wechselfeld, welches das innerhalb des Laserrohres 10 strömende Lasergas zur stimulierten Emission von Strahlung mit einer Wellenlänge von 10,6 µm anregt. Die notwendige Versorgung der Innenelektroden 9 und der Außenelektroden 11 mit elektrischer Energie besorgt ein nicht mehr dargestellter Sender.

Günstig ist es, die Innenelektroden 9 über zumindest drei sich in senkrechter Richtung zur Laserlängsachse 4 erstreckende Stege 28 am Endblock 5 bzw. am Auskoppelblock 7 zu befestigen. Die Halterung der Innenelektroden am Ausströmblock 6 erfolgt bei diesem Ausführungsbeispiel in analoger Weise. Die Stege 28 fluchten in Richtung der Laserlängsachse betrachtet an allen Stellen miteinander, an welchen solche Stege vorgesehen sind.

Unterhalb der eben beschriebenen Anordnung ist ein Hohlprofilträger 12 vorgesehen, dessen Längsstrahlung parallel zur Laserlängsachse 4 verläuft. Auf dem Hohlprofilträger 12 sind der Endblock 5 und der Auskoppelblock 7 so aufgestellt, daß thermisch oder schwingungstechnisch bedingte Deformationen des Hohlprofilträgers 12 keine Verlagerungen zwischen dem Endblock 5 und dem Auskoppelblock 7 hervorrufen können, welche die Parallelität des Reflektors 2 relativ zum Auskoppelfenster 3 stören können. Dies wird im einzelnen noch weiter unten beschrieben.

Die Aufstellung des Ausströmblockes 6 ist demgegenüber wesentlich unkritischer. Dieser kann daher mit Füßen 13 unmittelbar auf dem Hohlprofilträger 12 aufgesetzt und mit diesem verschraubt werden. Um eine einmal (z.B. bei der Montage der Einrichtung) eingestellte Parallelität zwischen dem Endblock 5 und dem Auskoppelblock 7 auf Dauer aufrecht zu erhalten, können vier zueinander parallel verlaufende Hohlrohre 14 vorgesehen sein. Diese Hohlrohre 14 werden mit ihren Enden fest, sowohl in dem Endblock 5 als auch im Auskoppelblock 7 geklemmt und halten auf diese Weise die beiden Blöcke 5, 7 und somit auch das Auskoppelfenster 3 und den Reflektor 2 zueinander parallel. Die Hohlrohre 14 bestehen aus einem Material, welches sich unter Temperatureinfluß möglichst wenig dehnt. Ein solches Material ist z.B. dehnungsarmer Stahl (Invar) oder CFK (= kohlefaserverstärkter Kunststoff, insbesondere Epoxidharz).

Um eine im Betrieb auftretende, durch die Erwärmung bedingte Dehnung des Resonatoraufbaues und hier insbesondere der Laserrohre 10 und der Diffusoren 8 zu ermöglichen, ohne daß diese Dehnungen auf die Hohlrohre 14 übertragen werden, sind die Laserrohre 10 mit den Diffisoren 8, z.B. durch temperaturbeständige Verklebungen, dauerhaft und fest verbunden und mit ihren an den Auskoppelblock 7 bzw. an den Endblock 5 angrenzenden Enden in eine Ausnehmung in diesen Blöcken eingeschoben, haben aber an diesen Stellen noch immer eine freie Längsbeweglichkeit. Natürlich ist es auch möglich, die Laserrohre 10 im Auskoppelblock 7 bzw. im Endblock 5 fest einzusetzen und ihnen die freie Längsbeweglichkeit in Ausnehmungen der Diffusoren 8 zu geben.

Aus dem Ausströmblock 6 wird das Lasergas von einer Umwälzpumpe 15 abgesaugt, wobei dieses hier heiße Gas zuvor noch einen Vorkühler 16 durchläuft, damit die Temperatur des Gases beim Eintritt in die Umwälzpumpe 15 niedrig ist und dementsprechend die Dichte des Gases groß ist. In der Umwälzpumpe 15 erfährt das Gas eine Drucksteigerung, die umso höher ausfällt je größer die Dichte des Gases ist. Nachteilig ist die adiabatische Erwärmung des Lasergases bei der Verdichtung. Nachkühler 17 führen die Gastemperatur wieder auf einen möglichst niedrigen Wert zurück, damit das Gas mit möglichst niedriger Temperatur in die Laserrohre 10 eintritt und so das Erreichen von Schallgeschwindigkeit vermieden wird. In Summe führen der Vorkühler 16 und die Nachkühler 17 jene Wärmemenge ab, die im Kreislauf dem Gas durch die Verlustwärme des Hochfrequenzfeldes und die adiabatische Erwärmung bei der Verdichtung in der Umwälzpumpe 15 zugeführt wurden.

Die Umwälzpumpe 15 ist über Befestigungselemente 18 und schwingungsdämpfende Gummifedern 19 auf einem Pumpenrahmen 20 aufgestellt. Der Vorkühler 16 wird mit der Umwälzpumpe 15 strömungsmäßig über steife Verbindungsrohre 21 verbunden und von diesen auch statisch getragen. Die Nachkühler 17 sind mit Laschen 25 und ebenfalls Gummifedern 19 am Pumpenrahmen 20 befestigt und über steife Rohrstutzen 22 mit der Druckseite der Umwälzpumpe 15 verbunden. Der Pumpenrahmen 20 hängt an vier Pendelstützen 26. Die Pendelstützen 26 sind über Kugelgelenke 27 sowohl mit dem Hohlprofilträger 12 als auch mit dem Pumpenrahmen 20 verbunden. Der Pumpenrahmen 20 kann daher eine räumliche Pendelschwingung gegegenüber dem Hohlprofilträger 12 ausführen. Allerdings bleibt die Amplitude der unter dem Einfluß der Restunwucht des Rotors der Umwälzpumpe 15 hervorgerufenen Schwingung sehr klein. Der Zweck dieser Maßnahme ist eine möglichst weitgehende Reduzierung der auf den Hohlprofilträger 12 in horizontaler Richtung rückwirkenden Unwuchtkräfte, welche von der Umwälzpumpe 15 im Betriebsfall freigesetzt werden. Die Pendelstützen 26 übernehmen auch alle Kraftwirkungen zwischen dem Resonatorteil und der Pumpenbaugruppe im Falle des Transportes der Montage und Demontage. Diese Kräfte müßten sonst von der für den Gastransport zu und von den Ringkanälen 10 vorgesehenen und teilweise sehr empfindlichen Verrohrung aufgefangen werden.

Von den Nachkühlern 17 strömt das Lasergas über Leitungsstränge 23 zu dem Auskoppelblock 7 bzw. zu dem Endblock 5. Die Enden der Leitungsstränge 23 werden über elastische Balgenrohre 24 in den Auskoppelblock 7 bzw. in den Endblock 5 gasdicht eingeleitet. Auch der Ausströmblock 6 ist mit dem Vorkühler 16 über gegebenenfalls etwas größer dimensionierte elastische Balgenrohre 24 verbunden, die dazu dienen, Schwingungsanregungen von der Umwälzpumpe 17 möglichst nicht auf den Resonatorteil zu übertragen.

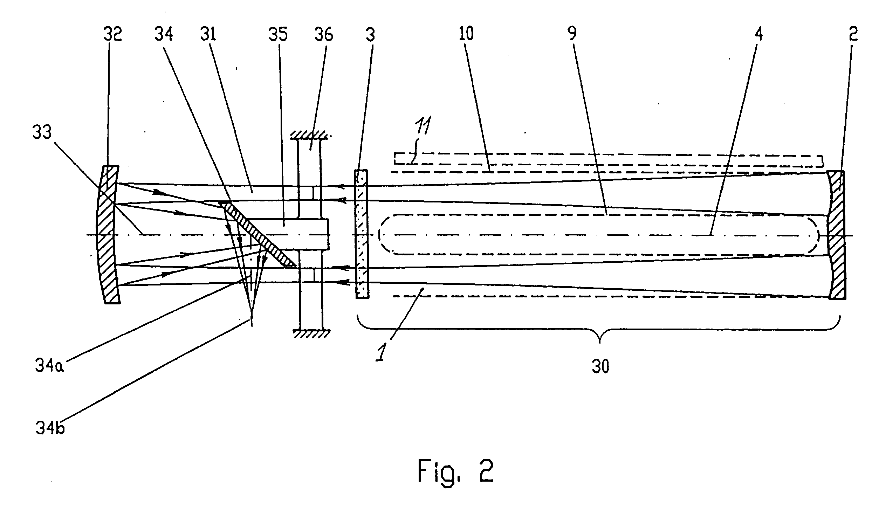

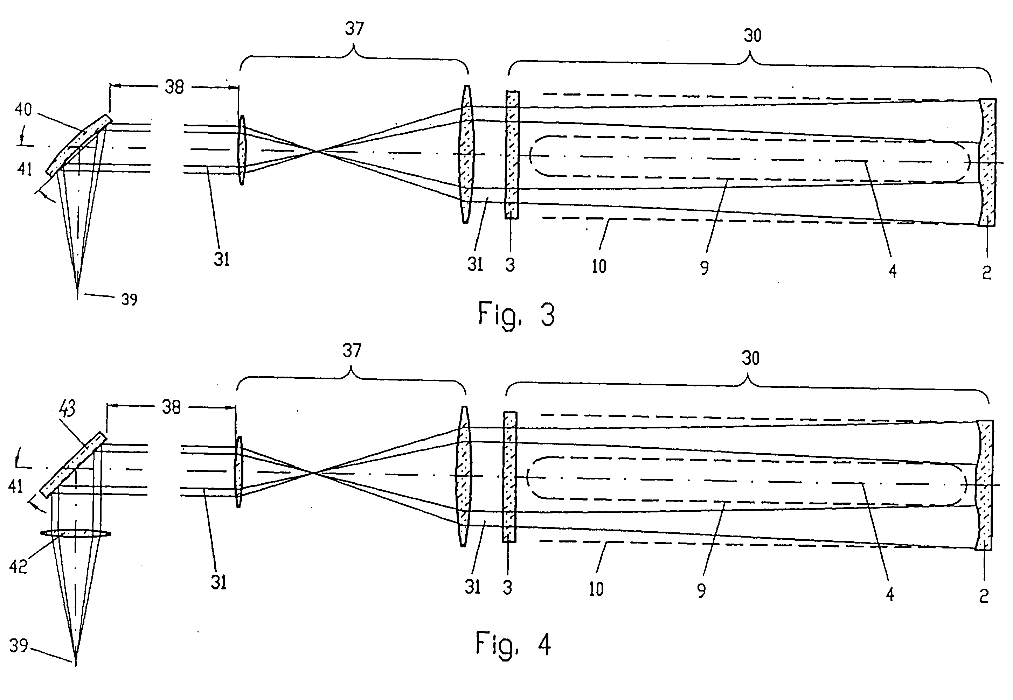

In Fig. 2 gelten die gleichen Bezeichnungen wie in Fig. 1. Es wird der optische Strahlengang innerhalb des hier schematisiert dargestellten Laser 30 und auch außerhalb desselben gezeigt. Der Laser 30 wird durch den Ringkanal 1 dargestellt, welcher durch die Innenelektrode 9, die Außenelektrode 10 und durch den Reflektor 2 und das Auskoppelfenster 3 umgrenzt ist. Der Ausströmblock 6 ist bei dieser und den nachfolgenden Fig. 3 und 4 nicht dargestellt, um die Zeichnung zu vereinfachen. Innerhalb des Lasers 30 wird im Ringkanal 1 das Lasergas zur Strahlungsemission angeregt. Die Anregung erfolgt durch das hochfrequente elektrische Wechselfeld zwischen der Außenelektrode 11 und der Innenelektrode 9. Ein Teil des in diesem Resonatorbereich entstehenden optischen Strahlungsfeldes tritt als Laserstrahl 31 durch das Auskoppelfenster 3 aus. Die Größe dieses Anteiles wird durch den Reflexionsgrad des Auskoppelfensters 3 festgelegt. Das Querschnittsprofil des Laserstrahls 31 ist unmittelbar hinter dem Auskoppelfenster 3 ein Kreisring, wobei die für die Laserstrahlung typische gaußförmige Intensitätsverteilung der Strahlung über die Wanddicke des rohrförmigen Strahlungsfeldes anzutreffen ist. Wird unmittelbar nach dem Austritt des Laserstrahls 31 aus dem Laser 30 durch das Auskoppelfenster 3 der Laserstrahl 31 fokussiert und in dieser Form für Bearbeitungszwecke verwendet, so kann ein die Strahlung fokussierender, sphärischer Reflektor 32 mit seiner Symmetrieachse 33 konzentrisch zur Laserachse 4 in den Strahlengang gestellt werden. Die Strahlung wird dann über einen Planspiegel 34, z.B. senkrecht zur Laserachse 4, aus dem bisherigen Verlauf des Laserstrahls 31 ausgelenkt. Vorteilhaft ist bei dieser Anordnung, daß eine genau senkrecht zur Strahlachse 34a des am Planspiegel 34 reflektierten Strahlenbündels stehende Gaußtaillenebene 34b im Fokuspunkt erhalten wird und der Fokusfleck unverzerrt bleibt.

Der Plansspiegel 34 wird durch einen zylindrischen Fortsatz 35 und Halterungsstege 36 getragen. Die Halterungsstege 36 müssen zwar durch den rohrförmigen Laserstrahl 31 greifen, in Richtung der Laserachse 4 betrachtet, fluchten sie aber mit den Stegen 28 im Inneren des Lasers 30 und liegen daher in den Schattenbereichen des Strahls. Auf diese Weise wird eine Aufheizung der Halterungsstege 36 vermieden, die zu ungewollten Verlagerungen des Planspiegels 34 führen könnten.

In den Fig. 3 und 4 werden andere Möglichkeiten der Strahlführung außerhalb des Lasers 30 gezeigt, die wegen der besonderen Ausbildung des Strahlprofiles des hier beschriebenen Lasertyps wichtig sind.

In Fig. 3 wird der rohrförmige, aus dem Auskoppelfenster 3 austretende Laserstrahl 31 durch einen Kollimator 37, z.B. auf den halben Durchmesser verringert. Der Strahl durchsetzt nach dem Kollimator 37 dann eine längere Strecke 38 und kann innerhalb dieser Strecke auch über mehrere nicht mehr dargestellte Umlenkspiegel geführt werden. Unmittelbar vor der Bearbeitungstelle 39 ist ein sphärischer oder parabolischer Reflektor 40 vorgesehen, der unter einem Winkel 41 zur Achse des Laserstrahles 31 geneigt ist und den Strahl auf die Bearbeitungsstelle 39 umlenkt und fokussiert. Bei dieser Art der Strahlfokussierung wird allerdings die bei der Bearbeitungsstelle 39 vorliegende Strahltaille räumlich verzerrt. Die Anordnung in Fig. 4 vermeidet die eben beschriebene Strahlverzerrung. Es sind aber hier anstelle nur eines Reflektors 40 zwei Teile, nämlich ein Planumlenkspiegel 43 und eine Fokussieroptik 42, notwendig.

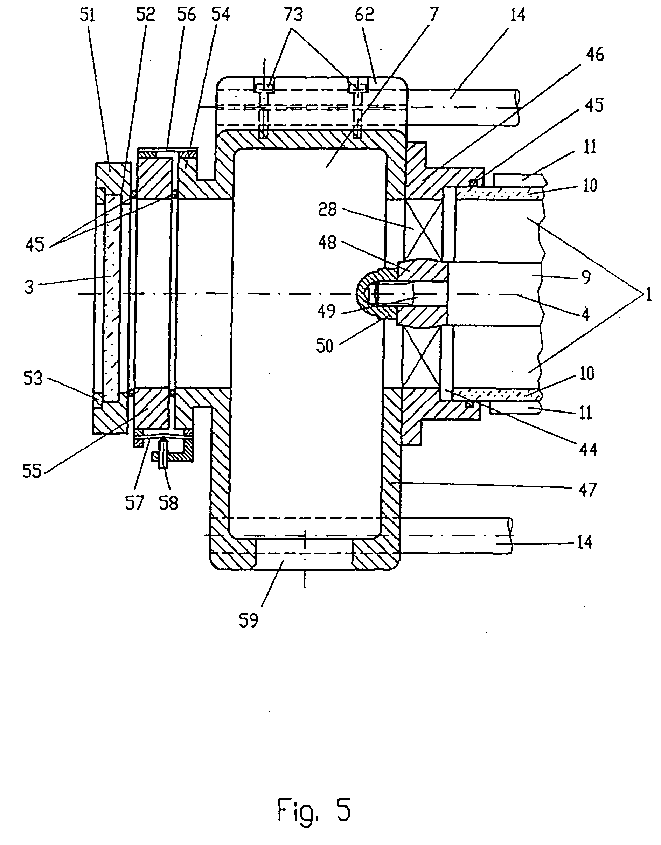

In Fig. 5 wird ein Schnitt längs der Laserachse 4 durch den Auskoppelblock 7 gezeigt. Insbesondere erkennt man in dieser Darstellung die gegenüber thermischen Dehnungen bewegliche Einbindung des Laserrohres 10 in den Auskoppelblock 7. Das Laserrohr 10 aus einer hitzefesten Glassorte weist kreisringförmigen Querschnitt auf und kann in einer Ausnehmung 44 in Richtung der Laserlängsachse 4 kleine Gleitbewegungen ausführen. Die Ausnehmung 44 hat kreisförmigen Querschnitt, dessen Durchmesser ein wenig größer ist als der Außendurchmesser des Laserrohres 10. Aus diesem Grunde können sowohl thermische Dehnungen in Längsrichtung des Laserrohres 10 als auch thermische Dehnungen des Durchmessers des Laserrohres 10 aufgefangen werden. Für eine Abdichtung des Laserrohres 10 gegenüber dem Verbindungsring 46 sorgt ein temperaturbeständiger O-Ring 45. Auf die beschriebene Weise wird ein Lufteintritt in den Ringkanal 1 unter der Wirkung des äußeren atmosphärischen Druckes verhindert. Der O-Ring 45 muß auch beständig gegen die Zerfallsprodukte des Lasergases und der umgebenden Luft sein. So bildet sich z.B. aus Luftsauerstoff unter der Wirkung allfällig aus den Laserrohren austretender UV-Strahlung Ozon, welches bestimmte Elastomere stark angreift.

Der Verbindungsring 46 wird an einer Seitenwand 47 des Auskoppelblockes 7 vakuumdicht aufgeschraubt. Im Inneren, der Gasströmung zugewendeten Bereich des Verbindungsringes 46 sind senkrecht zur Laserlängsachse 4 dünne Stege 28 vorgesehen, die für die Befestigung der Innenelektrode 9 dienen. Im allgemeinen wird man nur drei Stege anordnen, weil deren Dicke den Gasströmungsquerschnitt reduziert. Anderseits kann man die Dicke dieser Stege 28 nicht beliebig klein machen, weil sonst die Innenelektrode 9 nicht ausreichend stabil und schwingungssteif aufgehängt werden kann. Natürlich können auch mehr als drei Stege 28 vorgesehen werden. Die Stege 28 münden in eine Nabe 48, durch deren Bohrung ein Zapfen 49 der Innenelektrode 9 ragt, der mit einer Mutter 50 gegen die Nabe 49 verspannt wird.

Das Auskoppelfenster 3 ist auf der in der Zeichnung linken Seitenfläche des Auskoppelblockes 7 angeordnet. Es sitzt dicht in einer entsprechenden Ausnehmung einer Fensterfassung 51, u.zw. wird es an eine Bundfläche 52 mittels eines Schraubringes 53 angepreßt. Zwischen der Fensterfassung 51 und einem Flansch 54 des Auskoppelblocks 7 ist eine Stellplatte 55 vorgesehen. Die Stellplatte 55 trägt an ihrem oberen Rand eine Blattfeder 56, die als Biegegelenk dient. Am unteren Rand der Stellplatte 55 ist eine weitere Blattfeder 57 als Stellorgan vorgesehen. Drückt man mit einer Stellschraube 58 gegen die Blattfeder 57, so verkürzt sich diese. Dadurch neigt sich die Stellplatte 55 und mit dieser die Fensterfassung 51 in vertikaler Richtung gegenüber dem Flansch 54 ein wenig. Eine in der Wirkungsweise völlig gleichartige Mechanik ist zwischen der Stellplatte 55 und der Fensterfassung 51 vorgesehen, nur befinden sich die entsprechenden Stellelemente am vorderen und hinteren Rand der Fensterfassung 51 bzw. der Stellplatte 55, sind also in Fig. 5 nicht sichtbar. Durch diese Mechanik kann die horizontale Neigung der Fensterfassung 51 gegenüber der Stellplatte 55 verstellt werden. Auf diese Weise kann die Fensterfassung 51 um eine vertikale und horizontale Achse gegenüber dem Flansch 54 und damit dem Auskoppelblock 7 verschwenkt werden. Wie später noch gezeigt wird, ist für den Reflektor 2 am Endblock 5 eine ganz ähnliche Justiermechanik vorgesehen. Eine Ausrichtung des Auskoppelfensters 3 und des Reflektors 2 auf genaue Parallellage zueinander und senkrechte Lage zur Laserlängsachse 4 wird dadurch ermöglicht.

Die vorstehend beschriebene Einstellmechanik hat den Vorteil, völlig spielfrei zu arbeiten, da nur innere Deformationen der beteiligten Blattfedern angesprochen werden. Verzichtet man auf eine Justiermöglichkeit von Reflektor 2 und Auskoppelfenster 3 relativ zur Laserachse, dann könnte die Stellplatte 55 auch entfallen. Man müßte dann nur das Auskoppelfenster 3, z.B. um eine Horizontalachse und den Reflektor 2 um eine Vertikalachse verschwenkbar halten, um die Einstellung der Parallellage der beiden Elemente zueinander zu ermöglichen. Im unteren Bereich des Auskoppelblockes 7 ist eine Aussparung 59 für die Aufnahme des Balgenrohres 24 (Fig. 1) vorgesehen.

Zwischen dem Fensterrahmen 51 und der Stellplatte 55 und ebenso zwischen der Stellplatte 55 und dem Flansch 54 am Auskoppelblock 7 ist je ein die Außenatmosphäre vom Lasergasraum abdichtender O-Ring 45 vorgesehen. Beide O-Ringe 45 sind vorgepannt montiert, d.h. bei genauer Parallellage der angrenzenden Teile schon ein wenig zusammengedrückt.

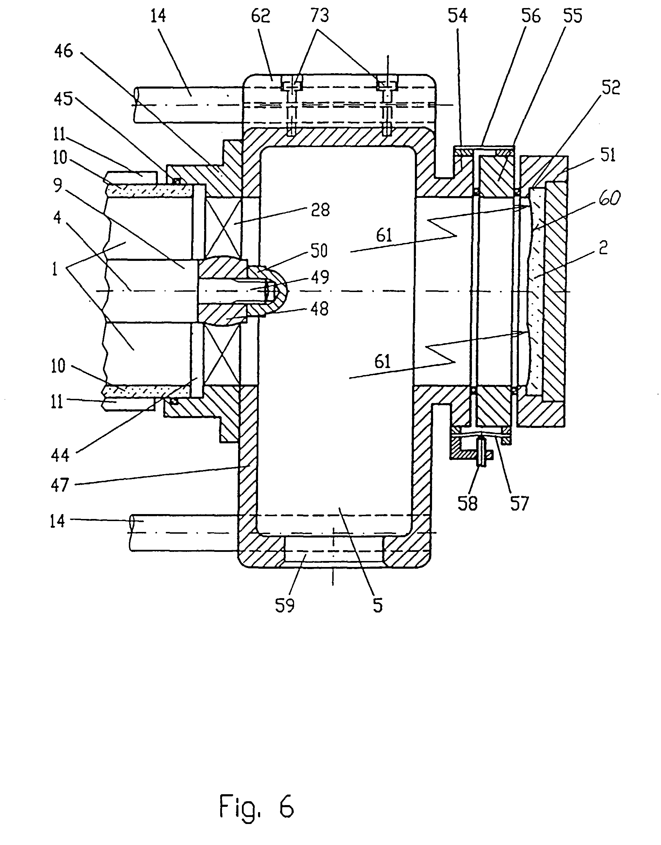

In Fig. 6 wird ein Schnitt längs der Laserlängsachse 4 durch den Endblock 5 gezeigt. Es gelten die gleichen Bezeichnungen wie in den zuvor besprochenen Fig. Der Endblock 5 trägt den Reflektor 2, der toroidale Flächen 60 aufweist, die in dieser Schnittdarstellung wegen der besseren Erkennbarkeit mit einem wesentlich kleineren Krümmungsradius 61 gegenüber den tatsächlich ausgeführten Radien gezeichnet sind. Der wirkliche Krümmungsradius 61 beträgt 10 bis 20 m. Die Befestigung der Hohlrohre 14 im Endblock 5 erfolgt durch Klemmschrauben 73, mit welchen eine geschlitzte Nabe 62 des Endblocks 5 an die Außenwand der Hohlrohre 14 gepreßt wird. Die Wirkungsweise der übrigen Teile entspricht jener der gleich bezeichneten Teile in Fig. 5.

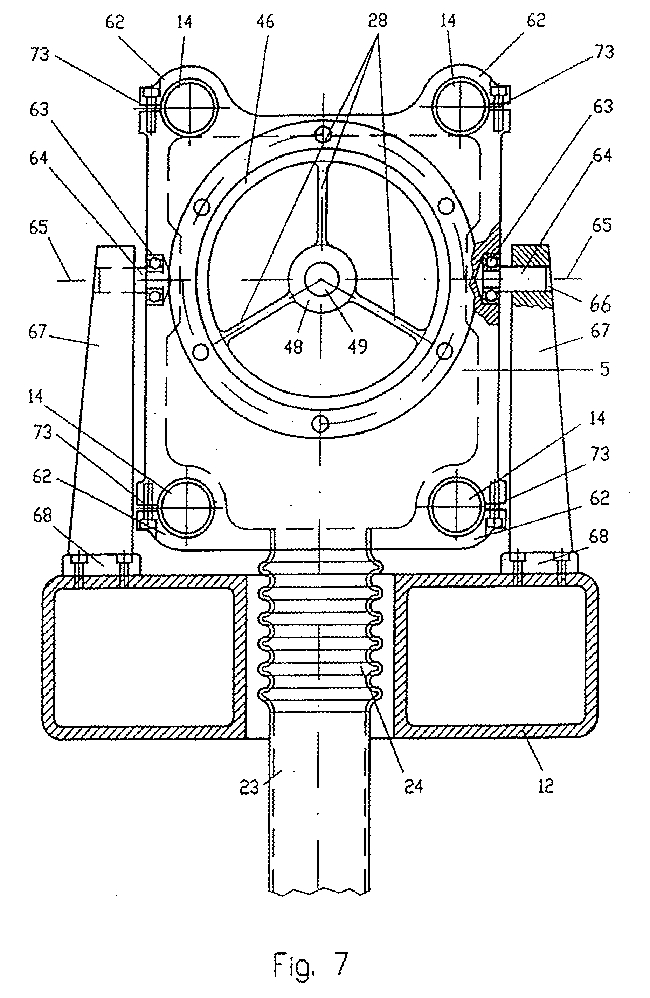

Fig. 7 zeigt einen Schnitt senkrecht zur Laserlängsachse 4 in der Nähe des Auskoppelblockes 5 (Fig. 1). Die Stege 28 im Verbindungsring 46 laufen in radialer Richtung auf die Laserlängsachse 4 zu und münden in der Nabe 48. Die Nabe 48 umfaßt den Zapfen 49 der hier nicht dargestellten Innenelektrode 9. Zwei Kugellager 63 nehmen zwei Zapfen 64 auf und ermöglichen, daß der Auskoppelblock 5 um eine starre horizontale Achse 65 pendeln kann. Dieses Pendeln kommt jedoch nur unter dem Einfluß sehr kleiner Wärmedehnungen oder kleiner elastischer Schwingungsausschläge der gesamten maschinellen Einrichtung zustande. Die Zapfen 64 sind in Bohrungen 66 vertikaler Stützen 67 eingeklemmt, die bei 68 mit dem Hohlprofilträger 12 fest verschraubt sind.

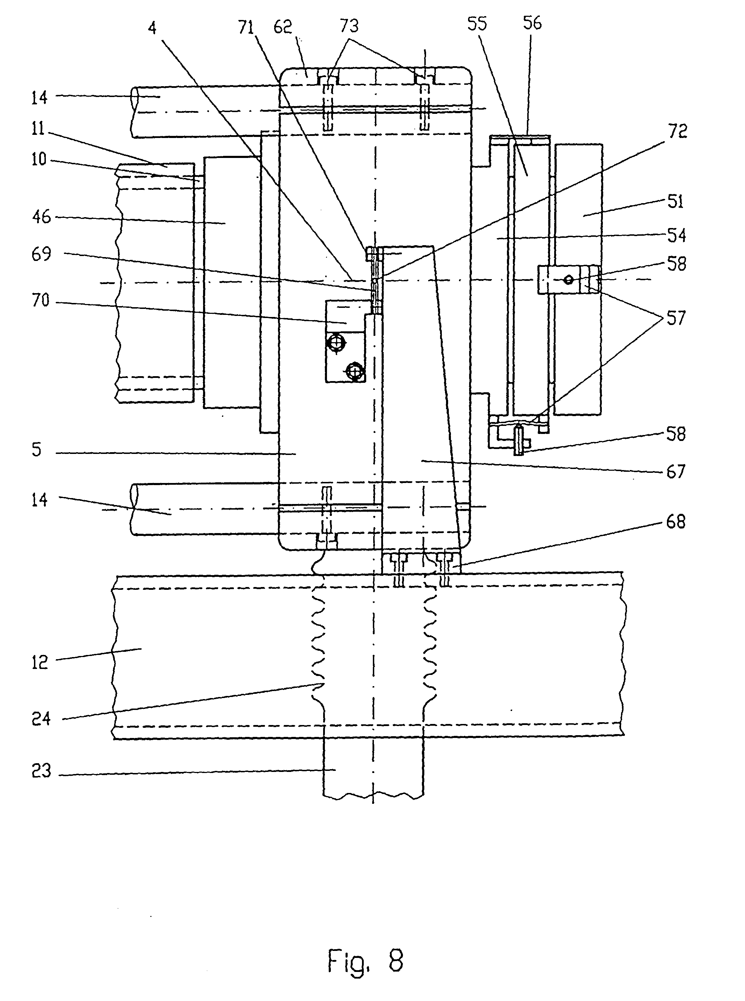

Fig. 8 zeigt eine Seitenansicht des Endblockes 5 senkrecht zur Richtung der Laserlängsachse 4 und die Aufhängung des Endblockes 5 mit Hilfe von Blattfederpaketen 69. Das sichtbare Blattfederpaket 69 ist mit seinem unteren Ende in einer Halterung 70 fest eingeklemmt. Die Halterung 70 ist mit dem Endblock 5 fest verschraubt. Am oberen Ende ist das Blattfederpaket 69 durch eine Schraubklemmung 71 mit dem oberen Ende der vertikalen Stütze 67 verbunden. Durch diese Art der Aufhängung des Endblockes 5 kann dieser nicht nur eine geringe Pendelbewegung um seine Horizontalachse 72 ausführen, sondern kann auch eine geringe Ausgleichsbewegung entlang der Laserlängsachse 4 beschreiben, ohne daß unzulässige Zwangskräfte auf den Hohlprofilträger 12 einwirken. Durch solche Zwangskräfte würde nicht nur der Hohlprofilträger 12, sondern auch der Resonator deformiert. Fig. 8 zeigt nocheinmal die Klemmung der Hohlrohre 14 im Endblock 5 durch zwei Klemmschrauben 73, durch welche die geschlitzte Nabe 62 des Endblockes 5 gegen die Wandung der Hohlrohre 14 gepreßt wird. Die übrigen Bezeichnungen haben die gleiche Bedeutung wie in den vorangehenden Figuren.

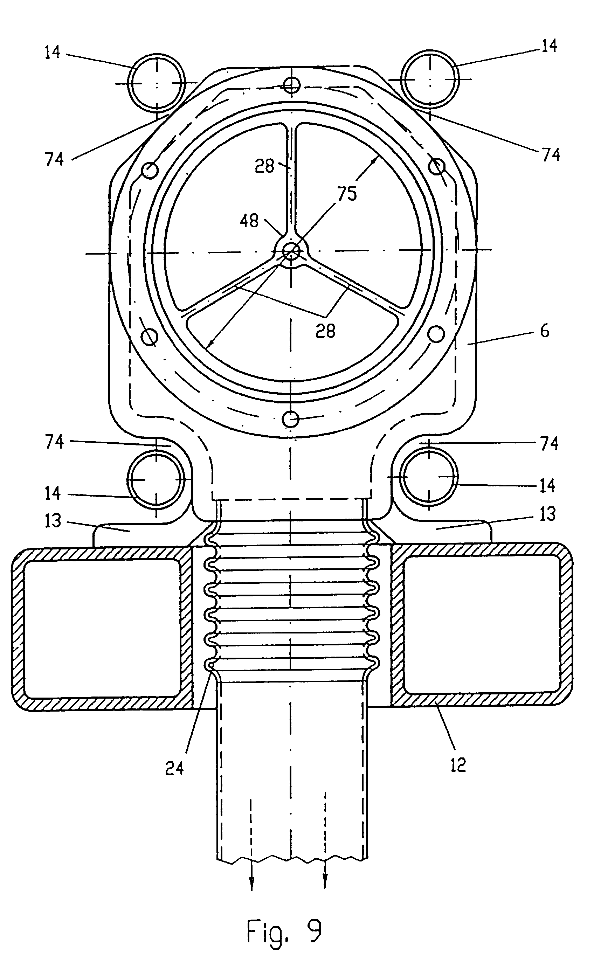

Fig. 9 zeigt eine Ansicht des Auströmblockes 6 in Richtung der Laserlängsachse 4. Vom Ausströmblock 6 strömt das heiße Lasergas über das elastische Balgenrohr 24 zum hier nicht mehr dargestellten Vorkühler 16 ab. Die vier Hohlrohre 14 laufen unter Wahrung ausreichender Abstände 74 an der Wand des Ausströmblockes 6 vorbei. Die Stege 28 zur Abstützung der hier nicht mehr gezeigten Innenelektrode 9 verlaufen auch hier radial zur Laserlängsachse 4 und führen im Zentrum zu einer Nabe 48 zusammen. Der für die Gasströmung offen gehaltene Querschnitt (Durchmesser 75) ist hier größer als bei dem Endblock 5 oder dem Auskoppelblock 7, weil der hier gezeigte Querschnitt am erweiterten Ende des Diffusors 8 liegt (Fig. 1). Mit Füßen 13 ist der Ausströmblock 6 auf dem Hohlprofilträger 12 aufgeschraubt. Die Wandungen des Auströmblockes 6 können auch als Doppelwandungen ausgeführt werden, in deren Kammern ein Kühlmedium eingeleitet werden kann.

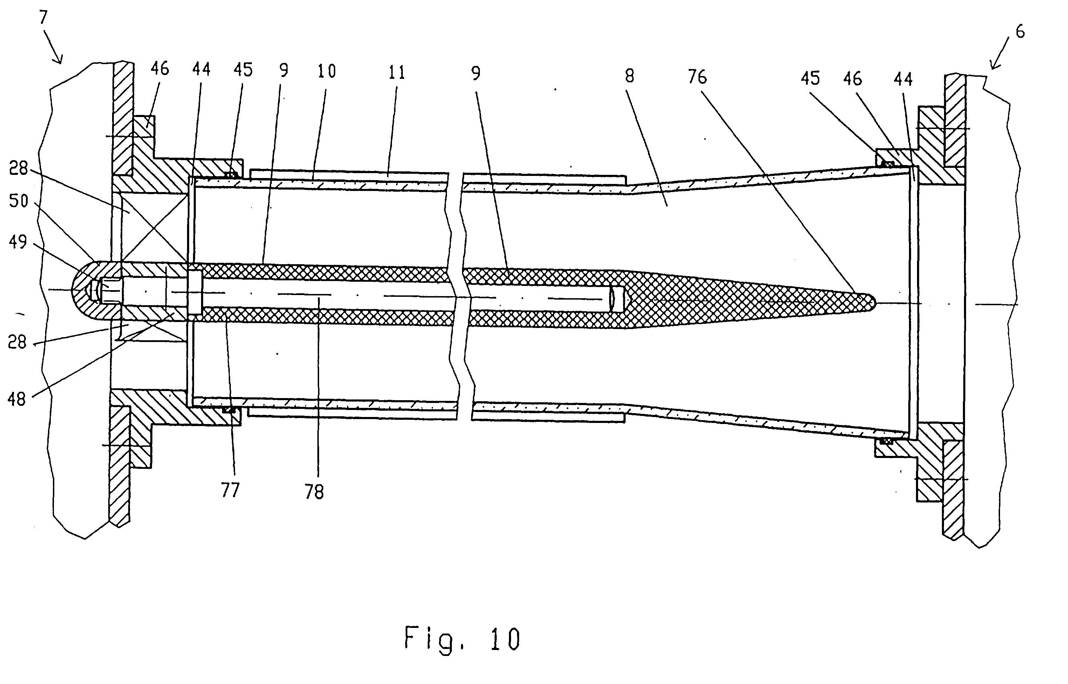

Fig. 10 zeigt eine in einigen Details etwas anders als zuvor beschrieben, ausgebildete Entladeröhre des Laserresonators. Der Diffusor 8 ist hier mit dem Laserrohr 10 zu einer Einheit vereinigt und besteht ebenso wie das Laserrohr 10 aus einer hitzebeständigen Glassorte. Das Laserrohr 10 ist zur Bildung des Diffusors 8 in einem Endbereich konisch aufgeweitet. Auch der in diesem Bereich hineinragende Teil der Innenelektrode 9 verjüngt sich und läuft hier in einer kegelförmigen Spitze 76 aus. Hiedurch wird der Diffusor 8 gebildet. Beide Enden des Laserrohres 10 werden in Ausnehmungen 44 von Verbindungsringen 46 aufgenommen. Über jeweils einen O-Ring 45 dichtet das Laserrohr 10 gegenüber den Verbindungsringen 46, wodurch der Eintritt von Luft in das Innere des Laserrohres 10 verhindert wird. Die Stege 28 sind bei diesem Ausführungsbeispiel in Richtung der Laserachse relativ breit ausgeführt. Die Stege 28 sind hier nur in jenem Verbindungsring 44 vorgesehen, welcher am Auskoppelblock 7 befestigt ist. Die Innenelektrode 9 wird über den aus ihr herausragenden Zapfen 49 und die Mutter 50 in der Nabe 48 gehalten. Bei diesem Ausführungsbeispiel besteht die Innenelektrode 9 aus einer Graphitumhüllung 77 und einem inneren Bolzen 78, auf welchem die Graphitumhüllung 77 zumindest an ihrem linksseitigen Ende mit Hilfe eines temperaturfesten Klebers (Keramik-Kleber) aufgekittet ist. An ihrer Außenseite, welche dem CO2-Gasstrom zugewendet ist, trägt die Innenelektrode 9 einen dünnen Goldmantel, der durch Metallbedampfung in Hochvakuum oder galvanisch aufgebracht werden kann. Dieser Goldmantel ist aus Gründen der Ionisation des Lasergases aufgebracht, seine Stärke ist entsprechend der Eindringtiefe zufolge des Skineffekts bei hochfrequenten Strömen gewählt und liegt bevorzugt im Bereich von einigen 10 Mikrometern. Prinzipiell könnte die Innenelektrode 9 auch ganz aus Metall gefertigt werden, jedoch ist es dann notwendig, den Goldmantel an der Außenhaut wesentlich dicker zu halten, wenn die Elektrode wie bei diesem Ausführungsbeispiel ungekühlt im CO2-Gasstrom liegt. Während des Betriebes nimmt die Innenelektrode Temperaturen bis zu 400°C an. Bei diesen Temperaturen kommt es bereits zu beträchtlichen Diffusionserscheinungen von anderen Metallen in Gold und ebenso diffundiert Gold schnell in anderen Metallen. Unedlere Metalle können durch eine dünne Goldauflage rasch hindurchdiffundieren und dann auf der Oberfläche mit dem CO2-Anteil des Lasergases, welches bei diesen Temperaturen teilweise in CO und O2 zerfällt, chemisch reagieren und z.B. oxidische, Ablagerungen bilden. Kohlenstoff im Graphitkristall ist chemisch sehr fest gebunden (Schmelztemperatur Graphit = 3650°C) und daher auch thermisch sehr stabil. Allfällig trotzdem in die Goldauflage diffundierende und abdampfende C-Atome verändern die Lasergasspaltprodukte kaum. Anstelle von Graphit kann für die Innenelektrode auch ein keramisches Material verwendet werden, in welchem Fall aber der außen aufgebrachte Goldmantel ebenfalls dicker gehalten werden muß, da dieser nun ausschließlich als Stromrückleiter fungiert und die Stromstärken 50 A und mehr betragen können. Dieser hochfrequente Wechselstrom fließt über die Stege 28 zur Masse ab.

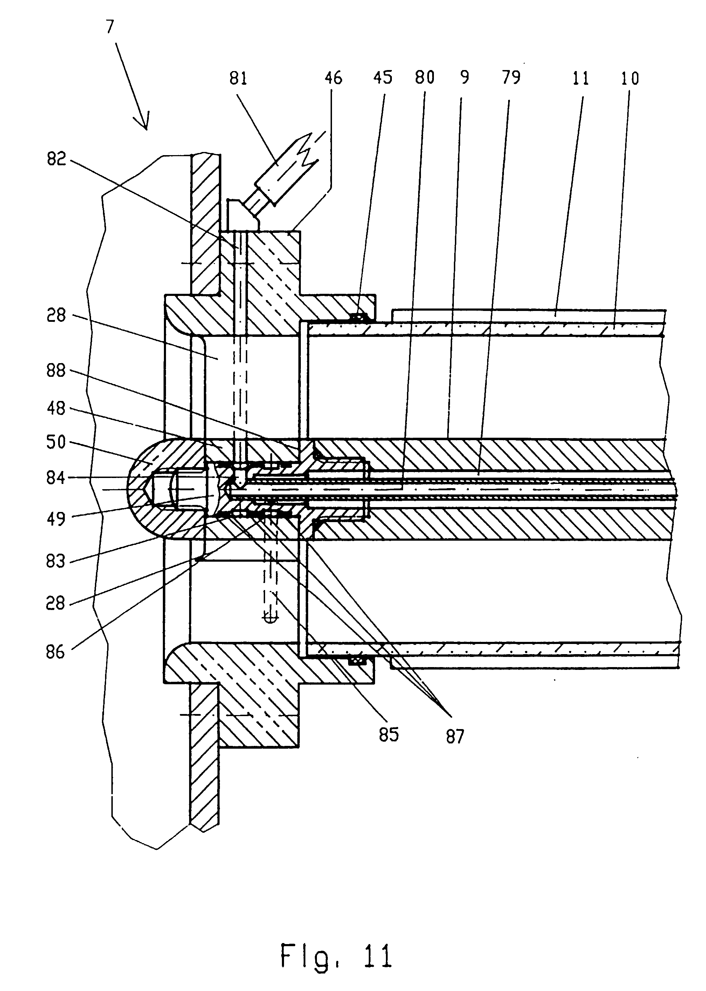

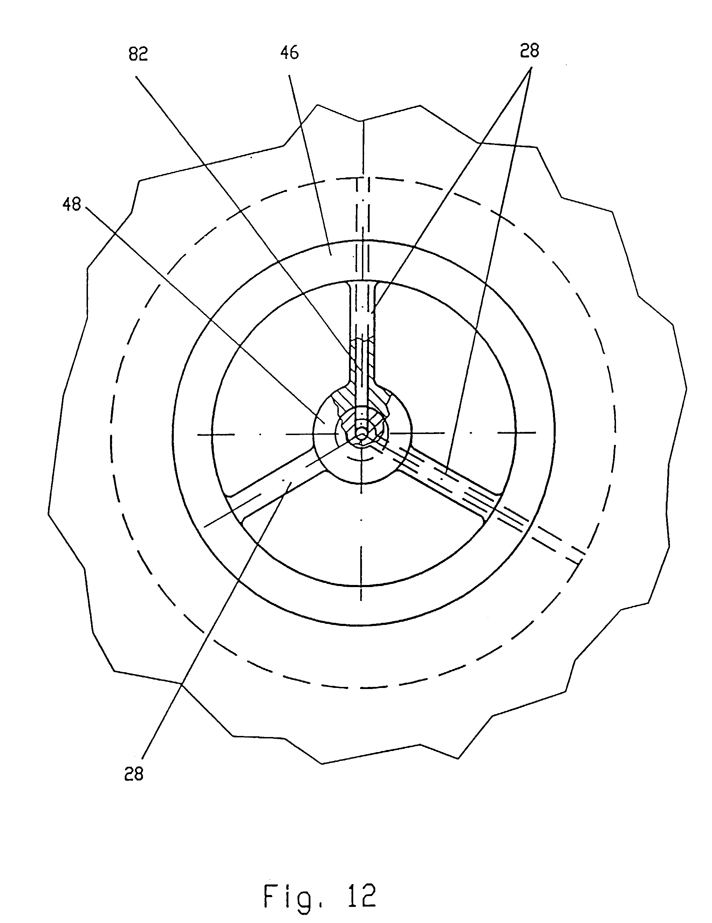

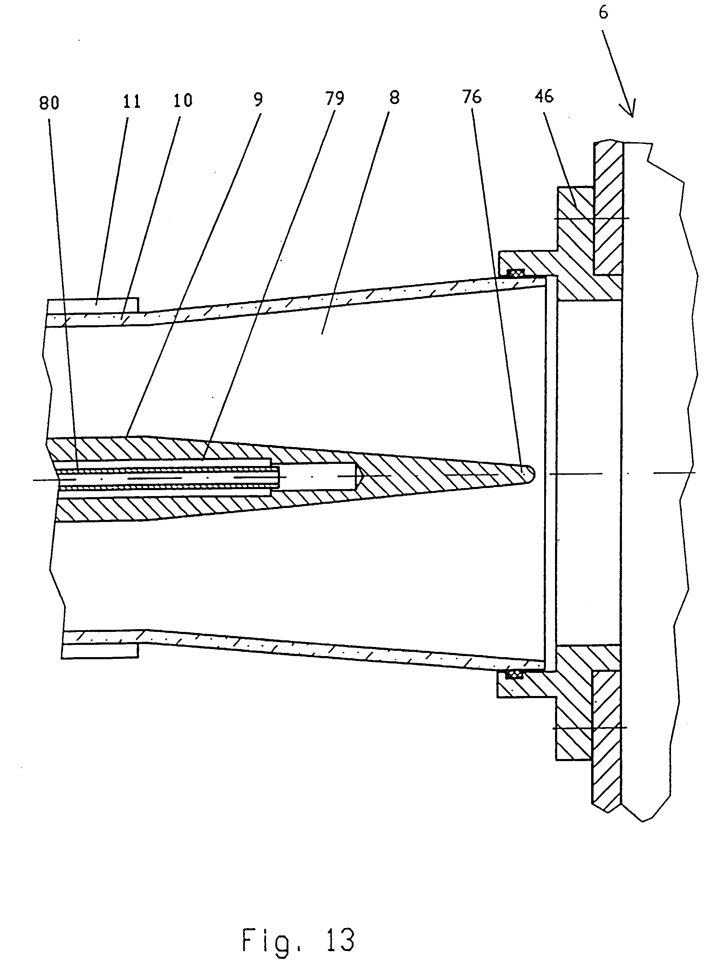

Eine andere Möglichkeit, die Verunreinigung des Lasermediums durch unedle Metalle zu verhindern, ist eine Kühlung der Innenelektrode; dies wird in den Fig. 11-13 gezeigt

Die Innenelektrode 9 ist in diesem Fall aus einem sehr hitzefesten Material, insbesondere aus Metall (Kupfer, Bronze, hitzebeständiger Stahl) gefertigt und weist eine Innenbohrung 79 auf, in welche ein dünnes Rohr 80 hineinragt. "Sehr hitzefest" bedeutet in diesem Zusammenhang, daß dauerhaft mittlere Temperaturen von ca. bis zu 300°C ohne Deformation ausgehalten werden müssen und daß zudem kein Absputtern von der Oberfläche bei lokalen, kurzzeitigen Filamenten in der Gasentladung stattfinden soll. Ein Kühlmittel (Kühlwasser, Kühlluft), welches über einen Kühlmittelschlauch 81 zugeführt wird, strömt über eine Querbohrung 82 durch den Steg 28 und die Nabe 48 in einen Ringkanal 83 bis zur Zuströmbohrung 84 im Zapfen 49. Von dieser tritt es dann in das dünne Rohr 80 ein. Das Kühlmittel verläßt das Rohr 80 nahe der kegelförmigen Spitze 76 der Innenelektrode 9, um in dem Ringbereich, der zwischen dem dünnen Rohr 80 und der Innenbohrung 79 verbleibt, wieder zurückzuströmen. Durch eine Bohrung 85 verläßt das Kühlmittel schließlich die Innenelektrode 9. Da im Bereich des Zapfens 49 die Lage der Zuströmbohrung 84 und auch jene der entsprechenden Abströmbohrung unsicher ist, sind im Zapfen 49 die Ringkanäle 83 und 86 vorgesehen, welche voneinander durch Dichtringe 87 abgeschottet sind. Zusätzlich kann je eine Dichtung zwischen die Mutter 50 und die Nabe 48 und ebenso zwischen die Nabe 48 und den Bund 88 eingelegt werden, sodaß ein Austritt von Kühlmedium sicher verhindert werden kann. Das Material dieser Dichtung kann z.B. Weichkupfer sein.

## Patentansprüche

1. Hochfrequenzerregter Gaslaser, dessen Strömungskanäle (10) von zylindrischen, im Querschnitt ringförmigen Außenelektroden (11) umschlossen sind, wobei in den Strömungskanälen konzentrisch zu den Außenelektroden, die Innenelektroden (9) angeordnet sind und jede Innenelektrode (9) über mindestens einen radial verlaufenden Steg (28) gegen die Innenwand des Strömungskanales (10) abgestützt ist, dadurch gekennzeichnet, daß die Abstützung jeder Innenelektrode (9) jeweils mindestens im Bereich der Eintrittsöffnung in den Strömungskanal (10) und außerhalb des durch die Erstreckung der Außenelektroden definierten Entladungsbereiches liegt.

2. Gaslaser nach Anspruch 1, dadurch gekennzeichnet, daß die Innenelektroden (9) fliegend im Bereich eines Ausströmblockes (6) endigen, in welchen die Strömungskanäle (10) einmünden (Fig. 10, 13).

3. Gaslaser nach Anspruch 1, dadurch gekennzeichnet, daß bei Abstützung der Innenelektrode (9) über nur einen radial verlaufenden Steg (28), dieser Steg (28) vertikal verläuft und demgemäß die Innenelektrode (9) von unten stützt.

4. Gaslaser nach einem der Ansprüche 1 bis 3, dadurch gekennzeichnet, daß die Innenelektrode durch die Stege (28) bzw. durch einen Steg im Bereich eines Diffusors (8) gestützt ist, der das austrittsseitige Ende des Strömungskanales bildet und daß sich die Innenelektrode in Richtung auf den Austritt aus dem Diffusor (8) gegebenenfalls verjüngt (Fig. 1 und 9).

5. Gaslaser nach einem der Ansprüche 1 bis 4, dadurch gekennzeichnet, daß zwei Innenelektroden (9) mit ihren Längsachsen (4) fluchtend zueinander angeordnet sind und durch den Ausströmblock (6) voneinander getrennt sind.

6. Gaslaser nach einem der Ansprüche 1 bis 5, dadurch gekennzeichnet, daß im optischen Strahlengang, nach dem Auskoppelfenster (3), ein Kollimator (37) zur Verkleinerung des Durchmessers des aus dem Auskoppelfenster (3) austretenden Laserstrahles (31) bevorzugt auf den halben Durchmesser des aus dem Auskoppelfenster (3) austretenden Laserstrahles (31) angeordnet ist (Fig. 3, 4).

7. Gaslaser nach einem der Ansprüche 1 bis 6, dadurch gekennzeichnet, daß zur Fokussierung des aus dem Auskoppelfenster (3) austretenden Laserstrahles (31) ein sphärischer oder parabolischer Reflektor (32 bzw. 40) vorgesehen ist, wobei zur Auslenkung des reflektierten Strahles aus dem zum Reflektor (32 bzw. 40) führenden Strahlenbündel ein Planspiegel (34) vorgesehen ist (Fig. 2) oder die Rotationsachse des Reflektors (40) unter einem Winkel (41) von bevorzugt 45°, gegen die optische Längsachse (4) des Laserstrahles (31) geneigt angeordnet ist (Fig. 2, 3).

## Claims

1. High-frequency excited gas-laser, of which the flow channels (10) are surrounded by cylindrical outer electrodes (11), ring-shaped in cross-section, in which situation the inner electrodes (9) are arranged in the flow channels concentrically to the outer electrodes, and each inner electrode (9) is supported by at least one web (28) running radially, against the inner wall of the flow channel (10), characterised in that the support of each inner electrode (9) in each case is located at least in the area of the intake aperture in the flow channel (10) and outside the discharge area defined by the extension of the outer electrodes.

2. Gas-laser according to Claim 1, characterised in that the inner electrodes (9) end floating in the area of an outflow block (6), into which the flow channels (10) open (Figs. 10, 13).

3. Gas-laser according to Claim 1, characterised in that, with the support of the inner electrode (9) being by means of only one radial web (28), this web (28) runs vertically and accordingly supports the inner electrode (9) from below.

4. Gas-laser according to one of Claims 1 to 3, characterised in that the inner electrode is supported by the webs (28) or by one web in the area of a diffusor (8), which forms the end of the flow channel at the outlet end, and that the inner electrode tapers if appropriate in the direction towards the outlet from the diffusor (8) (Figs. 1, 9).

5. Gas-laser according to one of Claims 1 to 4, characterised in that two inner electrodes (9) are arranged with their longitudinal axes (4) arranged in line with one another, and are separated from one another by the outflow block (6).

6. Gas-laser according to one of Claims 1 to 5, characterised in that, in the optical beam path, downstream of the coupling-out window (3), a collimator (37) is arranged for the reduction of the diameter of the laser beam (31) emerging from the coupling-out window (3), for preference to half the diameter of the laser beam (31) emerging from the coupling-out window (3) (Figs. 3, 4).

7. Gas-laser according to one of Claims 1 to 6, characterised in that, in order to focus the laser beam (31) emerging from the coupling-out window (3), a spherical or parabolic reflector (32 or 40 respectively) is provided for, in which situation a plane mirror (34) is provided (Fig. 2) in order to deflect the reflected beam from the ray bundle leading to the reflector (32 or 40 respectively), or the axis of rotation of the reflector (40) is arranged inclined at an angle (41) for preference of 45° against the optical longitudinal axis (4) of the laser beam (31) (Figs. 2, 3).

## Revendications

1. Laser à gaz excité en haute fréquence dont les canaux d'écoulement (10) sont entourés d'électrodes extérieures (11) cylindriques et de section annulaire, les électrodes intérieures (9) étant disposées dans les canaux d'écoulement concentriquement par rapport aux électrodes extérieures et chaque électrode intérieure (9) s'appuyant contre la paroi intérieure du canal d'écoulement (10) par l'intermédiaire d'au moins une barrette (28) s'étendant radialement, caractérisé en ce que l'appui de chaque électrode intérieure (9) se trouve au moins à la hauteur de l'ouverture d'entrée dans le canal d'écoulement (10) et à l'extérieur de la zone d'éclat définie par la projection des électrodes extérieures.

2. Laser à gaz selon la revendication 1 caractérisé en ce que les électrodes intérieures (9) se terminent en porte à faux à la hauteur d'un bloc d'éjection (6) dans lequel débouchent les canaux d'écoulement (10) (fig. 10, 13).

3. Laser à gaz selon la revendication 1 caractérisé en ce qu'en cas d'appui de l'électrode intérieure (9) par l'intermédiaire d'une seule barrette (28) s'étendant radialement, cette barrette (28) s'étend verticalement et en conséquence, soutient par le bas l'électrode intérieure (9).

4. Laser à gaz selon l'une des revendications 1 à 3 caractérisé en ce que l'électrode intérieure est soutenue par les barrettes (28) ou une barrette à la hauteur d'un diffuseur (8), lequel forme l'extrémité de sortie du canal d'écoulement, et en ce que l'électrode intérieure, le cas échéant, s'amincit en direction de la sortie du diffuseur (8) (fig. 1 et 9).

5. Laser à gaz selon l'une des revendications 1 à 4 caractérisé en ce que deux électrodes intérieures (9) sont disposées en alignement précis l'une par rapport à l'autre selon leurs axes longitudinaux (4) et séparées l'une de l'autre par le bloc d'éjection (6).

6. Laser à gaz selon l'une des revendications 1 à 5 caractérisé en ce qu'on a disposé sur la trajectoire optique des rayons et en aval de la fenêtre de sortie (3), un collimateur (37) destiné à réduire de préférence à sa moitié le diamètre du rayon laser (31) émergeant de la fenêtre de sortie (3) (fig. 3, 4).

7. Laser à gaz selon l'une des revendications 1 à 6 caractérisé en ce qu'à des fins de focalisation du rayon laser (31) émergeant de la fenêtre de sortie (3), on a prévu un réflecteur sphérique ou parabolique (32 ou 40), un miroir plan (34) étant prévu pour dévier le rayon reflété et le sortir du faisceau de rayons conduisant au réflecteur (32 ou 40) (fig. 2) ou l'axe de rotation du réflecteur (40) étant disposé incliné contre l'axe longitudinal optique (4) du rayon laser (31) selon un angle (41) de 45° de préférence (fig. 2, 3).
